Europäisches Patentamt

European Patent Office

Office européen des brevets

(19)

(11) Veröffentlichungsnummer: **0 297 471**

**A2**

(12) **EUROPÄISCHE PATENTANMELDUNG**

(21) Anmeldenummer: **88110163.8**

(22) Anmeldetag: **25.06.88**

(51) Int. Cl.⁴: **B25B 5/00**

(30) Priorität: **30.06.87 DE 3721531**

(43) Veröffentlichungstag der Anmeldung:
**04.01.89 Patentblatt 89/01**

(84) Benannte Vertragsstaaten:
**AT BE CH ES FR GB IT LI NL**

(71) Anmelder: **Chr. Eisele Maschinenfabrik GmbH & Co. KG.**
**Nürtinger Strasse 9 - 15**
**D-7316 Köngen(DE)**

(72) Erfinder: **Lauffer, Adelbert**
**Odenwaldstrasse 2**
**D-7410 Reutlingen 28(DE)**

(74) Vertreter: **Hoeger, Stellrecht & Partner**
**Uhlandstrasse 14c**
**D-7000 Stuttgart 1(DE)**

(54) **Verfahren zum Steuern einer Spannvorrichtung.**

(57) Eine Spannvorrichtung für das gleichzeitige Einspannen mehrerer, achsparallel nebeneinanderliegender, zylindrischer Werkstücke wird folgendermassen gesteuert: Ein erster Spannbacken wird an
die Werkstücke so weit angenähert, daß diese zwischen diesem Backen und einer die Werkstücke von
unten abstützenden Auflagefläche im wesentlichen
lose gehalten und in Richtung senkrecht bei einer
seitlichen Werkstückanlagefläche geführt sind. Alsdann wird ein zweiter Spannbacken vorgeschoben,
so daß er die zwischen Auflagefläche und den ersten
Spannbacken geführten Werkstücke mit einer vorgegebenen Spannkraft gegen die Anlagefläche presst.
Anschließend wird der zweite Spannbacken in seiner
erreichten Stellung verriegelt. Schließlich wird der
erste Spannbacken mit derart abgestimmter Kraft an
die Werkstücke angelegt, daß aufgrund elastischer
Verformung der Werstücke diese allseits mit im
wesentlichen gleichem Pressdruck zwischen Auflagefläche, Anlagefläche und den Spannbacken eingespannt sind.

FIG.1

## Verfahren zum Steuern einer Spannvorrichtung

Die Erfindung betrifft ein Verfahren zum Steuern einer Spannvorrichtung für das gleichzeitige Einspannen mehrerer, achsparallel nebeneinanderliegender, zylindrischer Werkstücke mit einer Auflagefläche zur Abstützung der nebeneinanderliegenden Werkstücke, mit einer im wesentlichen rechtwinklig zur Auflagefläche angeordneten Anlagefläche, mit einem ersten im wesentlichen senkrecht zur Auflagefläche verschieblichen Spannbacken, mit einem zweiten im wesentlichen senkrecht zur Anlagefläche verschieblichen Spannbacken, mit ersten und zweiten Antriebsmitteln für die Spannbacken und mit Steuermitteln für die Antriebsmittel.

Spannvorrichtungen dieser Art werden im allgemeinen so gesteuert, daß beide Spannbacken gleichzeitig oder kurz nacheinander an die nebeneinanderliegenden Werkstücke angepresst werden. Dabei ist meist nicht sichergestellt oder es kann nur in sehr umständlicher Weise sichergestellt werden, daß die Werkstücke mit allseits im wesentlichen gleichem Spanndruck eingespannt sind.

Es ist Aufgabe der Erfindung, ein einfaches Verfahren anzugeben, mit dessen Hilfe die angegebene Spannvorrichtung so gesteuert werden kann, daß die Werkstücke mit bestimmten, gleichmäßigem Anpressdruck einspannbar sind.

Die Aufgabe wird erfindungsgemäß durch folgende Verfahrensschritte gelöst:

A) der erste Spannbacken wird an die Werkstücke so weit angenähert, daß diese zwischen diesem Backen und der Auflage im wesentlichen lose gehalten und in Richtung senkrecht zur Anlagefläche geführt sind;

B) der zweite Spannbacken wird so weit vorgeschoben, daß er die zwischen der Auflage und dem ersten Spannbacken geführten Werkstücke mit einer vorgegebenen Spannkraft gegen die Anlagefläche presst;

C) der zweite Spannbacken wird in seiner erreichten Position verriegelt;

D) der erste Spannbacken wird anschließend mit derart abgestimmter Kraft an die Werkstücke angelegt, daß aufgrund elastischer Verformung der Werkstücke diese allseits mit im wesentlichen gleichem Pressdruck zwischen Auflagefläche, Anlagefläche und den Spannbacken eingespannt sind.

Die nachstehende Beschreibung einer bevorzugten Ausführungsform der Erfindung dient im Zusammenhang mit beiliegender Zeichnung der weiteren Erläuterung. Es zeigen:

Fig. 1 schematisch eine Schnittansicht einer Spannvorrichtung;

Fig. 2 eine Schnittansicht der Vorrichtung entlang der Linie 2-2 in Fig. 1 und

Fig. 3 - 6 schematisch die Durchführung verschiedener Schritte beim Steuern der Vorrichtung aus Fig. 1 und 2.

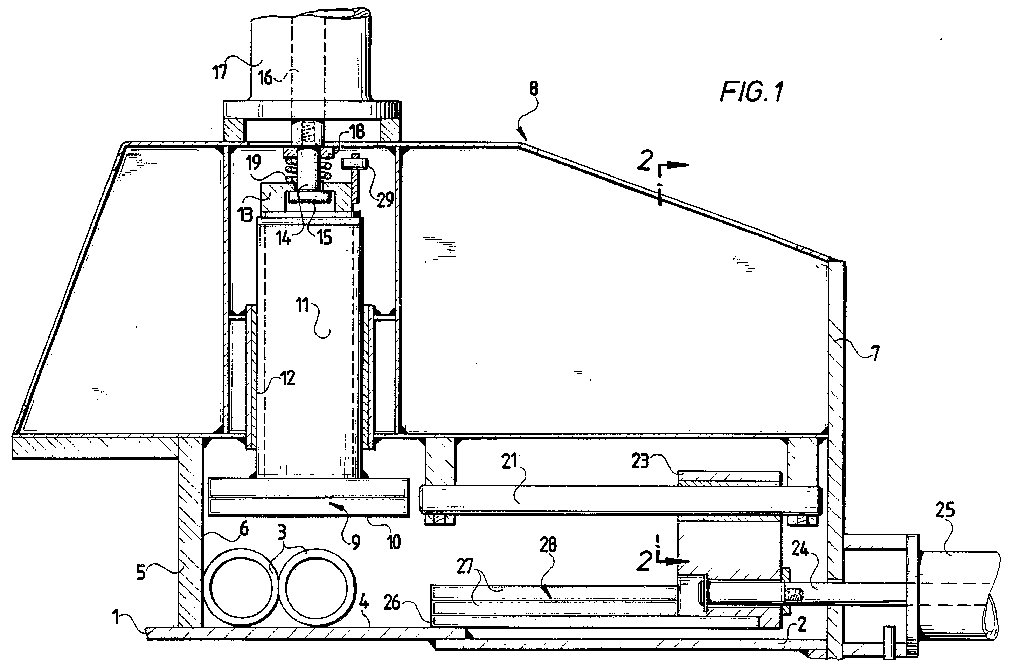

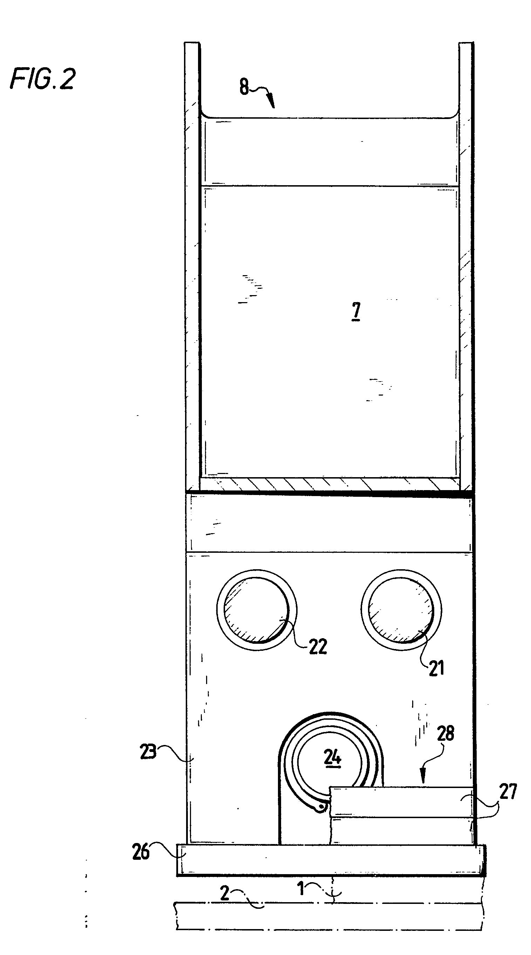

Die in Fig. 1 und 2 dargestellte Spannvorrichtung umfaßt ein ortsfestes Maschinengestell mit zwei abgestuft miteinander verschweißten Platten 1, 2.

Die Oberseite der Platte 1 bildet eine Auflagefläche 4 für achsparallel nebeneinanderliegende, zylindrische Werkstücke 3, beispielsweise Rohre. Von der Platte 1 steht senkrecht eine Platte 5 ab, deren den Werkstücken 3 zugekehrte Seite eine Anlagefläche 6 für die Werkstücke 3 bildet. Die Platte 5 bildet zusammen mit einer weiteren, fest mit der Platte 2 verbundenen Platte 7 eine Halterung für ein Trägergestell 8, das der verschieblichen Lagerung eines ersten Spannbackens 9 dient. Der plattenförmige Spannbacken 9 weist eine ebene Unterseite 10 auf, die von oben her an die unten von der Auflagefläche 4 abgestützten Werkstücke 3 anlegbar ist. Der Spannbacken 9 ist mit einem Schlitten 11 verbunden, der in einer Führung 12 vertikal gleitverschieblich ist. Der Schlitten 11 trägt an seiner Oberseite eine hinterschnittene Auflage 13, in welche mit vertikalem Spiel ein an einem Ankerbolzen 14 befestigter Teller 15 eingreift. Der Ankerbolzen 14 ist fest mit dem Ende der Kolbenstange 16 eines Druckmittelzylinders, insbesondere Hydraulikzylinders verbunden. Zwischen der Oberseite der Auflage 13 und der mit einem Bund 18 versehenen Kolbenstange 16 ist eine Schraubendruckfeder 19 angeordnet, welche die Anordnung in der dargestellten Lage hält. In dieser Lage ist der Spannbacken durch die Feder 19 elastisch nach unten vorgespannt, wobei der in der hinterschnittenen Auflage 13 liegende Teller 15 die Endposition des ersten Spannbackens 19 bestimmt. Mit Hilfe des Zylinders 17 kann der Spannbacken 9 auf- und abbewegt werden.

An zwei horizontalen Führungsstangen 21, 22 ist ein weiterer Schlitten 23 gleitverschieblich geführt, der mit der Kolbenstange 24 eines weiteren Druckmittelzylinders 25, vorzugsweise Hydraulikzylinders, starr verbunden ist. An der Unterseite des Schlitten 23 ist vorspringend eine Platte 26 befestigt, die sich mit ihrem freien Ende auf der Auflagefläche 4 abstützt. Mit der Platte 26 sind - in Abhängigkeit vom Durchmesser der Werkstücke 3- mehrere Platten 27 verbunden, so daß die Platten 26, 27 mit ihren freien Stirnseiten insgesamt einen zweiten Anschlag 28 für die Werkstücke 3 bilden, der dann wirkt, wenn der Schlittens 23 durch den Druckmittelzylinder 25 entsprechend weit vorgeschoben ist.

Somit können durch die beiden Spannbacken 9 und 28 die Werkstücke 3 eingespannt und in fester Anlage an der Auflagefläche 4 bzw. der Anlagefläche 6 gehalten werden.

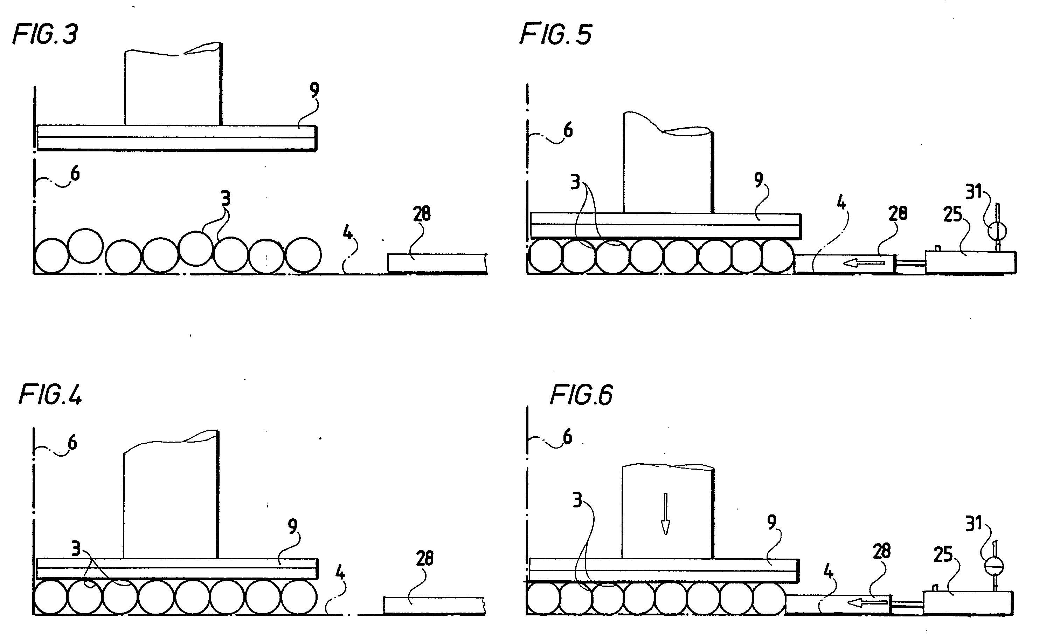

Zum Zwecke des Einspannens der Werkstücke 3 werden die beiden Spannbacken 9 und 28 in einer Weise gesteuert, die anhand der schematischen Figuren 3 - 6 erläutert wird. Zunächst wird der erste Spannbacken 9 von oben her an die Werkstücke 3 so weit angenähert (Fig. 3), daß diese zwischen dem Backen 9 und der Auflagefläche 4 im wesentlichen lose gehalten und in Richtung senkrecht zur Anlagefläche 6 geführt sind. Etwaige Unebenheiten in der horizontalen Packung der Werkstücke 3 können dabei ausgeglichen werden, so daß diese gleichmäßig in einer einzigen Schicht auf der Auflagefläche 4 aufruhen. Der Spannbacken 9 übt dabei aber keine wesentliche Presskraft auf die Werkstücke 3 aus.

Praktisch wird dies durch die Verbindung des Spannbackens 9 mit der Kolbenstange 16 des Druckmittelzylinders 17 erreicht, wie sie in Fig. 1 dargestellt ist.

An der Auflage 13 ist ein berührungsloser Schalter, beispielsweise eine Lichtschranke 29 angeordnet, die mit der benachbarten Kante des Bundes 18 zusammenwirkt. Wenn die Kolbenstange 18 nach abwärts bewegt wird, bewegt sich zunächst auch der erste Spannbacken 9 nach abwärts. Sobald dieser Spannbacken aber auf den Werkstücken 3 aufsetzt, und damit seine Abwärtsbewegung aufhört, bewegt sich der Bund 18 gegen die Wirkung der Feder 19 relativ zum Schalter 29 und betätigt diesen. Hierdurch wird der Druckmittelzufluss zum Zylinder 19 abgeschaltet, so daß der Spannbacken 9 nunmehr allein unter der Wirkung der Feder 19 steht und mit entsprechendem Druck gegen die Werkstücke 3 presst. Die Kraft der Feder 19 ist dabei so klein, daß die zwischen dem Spannbacken 9 und der Auflagefläche 4 liegenden Werkstücke noch auf dieser Fläche in Rich tung zur Anlagefläche 6 bewegt werden können.

Bei einer anderen Ausführungsform ist es auch möglich, durch eine entsprechende Zeitsteuerung die Kolbenstange 16 und damit den ersten Spannbacken 9 um eine kurze, vorbestimmte Strecke zurückzuführen und zu arretieren, sobald der Schalter 29 angesprochen hat. In diesem Falle ist der Spannbacken 9 geringfügig von den Werkstücken 3 abgehoben, bildet aber für diese immer noch eine horizontale Gleitführung, die sicherstellt, daß die einzelnen Werkstücke sich nicht aufeinanderschieben.

Die Fig. 4 zeigt den lose auf die Werkstücke 3 aufgesetzten und eine Führung für diese bildenden Spannbacken 9.

Nunmehr wird der zweite Spannbacken 28 über den Druckmittelzylinder 25 (in Fig. 5 nach links) verschoben, wodurch der zweite Spannbacken 28 in Anlage mit dem benachbarten Werkstück 3 kommt und alle Werkstücke gegen die Anlagefläche 6 presst. Die DruckmittelzuZylinder 25 wird so lange aufrechterhalten, bis ein bestimmter, gegen die Anlagefläche 6 wirkender Druck erreicht ist. Nach Erreichen dieses Druckes wird der Spannbacken 28 verriegelt, beispielsweise durch ein in der Druckleitung des Zylinders 25 vorgesehenes, herkömmliches Absperrventil 31. Bei dieser Einspannung der Werkstücke 3 durch den zweiten Spannbacken 28 können die einzelnen Werkstücke wegen des angenäherten, ersten Spannbackens 9 ihre Lage nach oben praktisch nicht verändern. Aufgrund der auf sie einwirkenden Presskraft kommt es zu einer gewissen elastischen Verformung der einzelnen Werkstücke 3 in horizontaler Richtung (Fig. 5).

Anschließend wird der erste Spannbacken 9 weiter nach abwärts bewegt, bis er mit vorgegebener Presskraft von oben gegen die Werkstücke 3 presst. Dabei kommt es zu einer vertikalen, elastischen Verformung der Werkstücke 3, so daß diese letzten Endes allseits gleichmäßig verformt zwischen Auflagefläche 4, Anlagefläche 6 und den beiden Spannbacken 9, 28 eingespannt sind. Die Drücke in den den Spannbacken 9, 28 zugeordneten Druckmittelzylindern 17 bzw. 25 werden so eingestellt, daß die Anpresskraft und damit die elastische Verformung allseits gleich ist (Fig. 6).

Wie aus Fig. 1 wiederum ersichtlich, bewegt sich die Kolbenstange 16 des Zylinders 17 und der mit ihm verbundene Ankerbolzen 14 bei weiterer Druckmittelzufuhr, sobald der erste Spannbacken 9 an den Werkstücken 3 anliegt, weiter nach unten, bis der Teller 15 auf die Oberseite des Schlittens 11 presst. Hierdurch kann dann der gewünschte Pressdruck auf die Werkstücke 3 direkt aufgebracht werden.

Den Druckmittelzylindern 17 und 25 sind an sich bekannte Meß- und Schalteinrichtungen zugeordnet, die in bekannter Weise die Einstellung der Spannbacken und das Abschalten der Druckmittelzufuhr regeln, wobei auch dem Zylinder 17 ein (nicht dargestelltes) Absperrventil analog zum Ventil 31 zugeordnet sein kann.

## Ansprüche

1. Verfahren zum Steuern einer Spannvorrichtung für das gleichzeitige Einspannen mehrerer, achsparallel nebeneinanderliegender, zylindrischer Werkstücke mit einer Auflagefläche zur Abstützung der nebeneinanderliegenden Werkstücke, mit einer im wesentlichen rechtwinklig zur Auflagefläche angeordneten Anlagefläche mit einem ersten im wesentlichen senkrecht zur Auflagefläche verschieblichen Spannbacken, mit einem zweiten im wesentlichen senkrecht zur Anlagefläche verschieblichen Spannbacken, mit ersten und zweiten Antriebsmitteln für die Spannbacken und mit Steuermitteln für die Antriebsmittel, **gekennzeichnet durch** folgende Verfahrensschritte:

A) der erste Spannbacken (9) wird an die Werkstücke (3) so weit angenähert, daß diese zwischen diesem Backen und der Auflagefläche (4) im wesentlichen lose gehalten und in Richtung senkrecht zur Anlagefläche (6) geführt sind;

B) der zweite Spannbacken (28) wird so weit vorgeschoben, daß er die zwischen der Auflagefläche (4) und dem ersten Spannbacken (9) geführten Werkstücke (3) mit einer vorgegebenen Spannkraft gegen die Anlagefläche (6) presst;

C) der zweite Spannbacken (28) wird in seiner erreichten Position verriegelt;

D) der erste Spannbacken (9) wird anschließend mit derart abgestimmter Kraft an die Werkstücke (3) angelegt, daß diese aufgrund eleastischer Verformung allseits mit im wesentlichen gleichem Pressdruck zwischen der Auflagefläche (4), der Anlagefläche (6) und den Spannbacken (9 bzw. 28) eingespannt sind.

2. Verfahren nach Anspruch 1, dadurch gekennzeichnet, daß der erste Spannbacken (9) während des Verfahrensschrittes (A) so gesteuert wird, daß er sich auf die Werkstücke (3) auflegt und diese ausrichtet und danach in seine angenäherte Position zurückkehrt.

3. Vorrichtung zur Durchführung eines Verfahrens nach Anspruch 1, dadurch gekenzeichnet, daß als Antriebsmittel für die Spannbacken (9, 28) erste und zweite Hydraulikzylinder (17 bzw. 25) vorgesehen sind, und der zweite Hydraulikzylinder (25) durch ein Absperrventil (31) verriegelbar ist.

FIG.1

FIG.2

FIG.3

9

6

3

4

28

FIG.4

6

3

9

4

28

FIG.5

6

3

9

4

28

25

31

FIG.6

6

3

9

4

28

25

31

EP 0 297 471 A2